# FASCICULE DE BREVET EUROPEEN

(11) **EP 1 307 520 B1**
(45) Date de publication et mention de la délivrance du brevet: **15.03.2006**
(21) Numéro de dépôt: 01958198.2
(22) Date de dépôt: 27.07.2001
(51) Int. Cl.: C09D 11/00, B41M 3/14

(54) **PRODUIT LIQUIDE ADHERENT OU D'ENDUCTION SECURISEE REVELABLE OPTIQUEMENT, PROCEDE DE MARQUAGE DE PRODUITS PAR UNE ENCRE LIQUIDE ET UTILISATIONS D'UN TEL PRODUIT**
GESICHERTES HAFTENDES FLÜSSIGES PRODUKT ODER BESCHICHTUNG, DIE OPTISCH ENTWICKELBAR IST, VERFAHREN ZUR MARKIERUNG VON PRODUKTEN MIT EINER FLÜSSIGEN TINTE UND VERWENDUNG VON DIESEM PRODUKT
SECURE OPTICALLY READABLE ADHESIVE OR COATING LIQUID PRODUCT, METHOD FOR MARKING PRODUCTS WITH A LIQUID INK AND USES OF SAID PRODUCT

(30) Priorité: 28.07.2000 FR 0009948
(43) Date de publication de la demande: 07.05.2003
(73) Titulaire: Cypher Science, 60700 Pont Sainte-Maxence (FR)
(72) Inventeur: DE LAMBERTERIE, Sébastien, F-75011 Paris (FR)
(74) Mandataire: Debay, Yves
(86) Numéro de dépôt international: PCT/FR2001/002480
(87) Numéro de publication internationale: WO 2002/010295

(56) Documents cités:
- EP-A- 0 469 957
- EP-A- 0 793 089
- WO-A-94/04918
- WO-A-95/02702
- WO-A-99/34984
- WO-A-99/52708
- DATABASE WPI Section Ch, Week 199320 Derwent Publications Ltd., London, GB; Class D22, AN 1993-164716 XP002164087 & JP 05 098202 A (SAKURA KUREPASU KK), 20 avril 1993 (1993-04-20)

## Description

L'invention concerne, un procédé de détection de produits par utilisation d'une encre de marquage incolore liquide révélable optiquement.

Il est connu dans l'art antérieur de marquer des produits, tels que des billets de banque, par des encres ou enductions comprenant des éléments fluorescents détectables optiquement. La fluorescence des encres est révélée par un rayonnement UV dont le spectre est compris environ entre 0,01 µm et 0,385 µm, ou par un rayonnement UV décalé, ou par un rayonnement IR dont le spectre est compris entre 0,76 µm et 1 mm, ou encore par un rayonnement de type lumière rasante.

Il est également connu une encre invisible à l'oeil nu commercialisée par la Société Eastman Chemical Company sous la marque Clir Code. Cette encre ne peut être détectée que par un appareil spécifique qui permet de révéler la fluorescence proche des Infrarouges compris entre 0,7 µm et 1mm.

D'autre part, il est connu de tracer des produits par l'intermédiaire de traceurs moléculaires, tels que des brins d'ADN, dont la présence est repérée par exemple par des particules sphériques fluorescentes, ces traceurs sont connus par les brevets suivants : EP 0 527 850, EP 0 657 028, EP 94 920 549.6. Les particules sphériques sont liées à des molécules fluorescentes détectables par microscopie à épifluorescence. Lorsque les particules sphériques ont été repérées par la fluorescence, les brins d'ADN qui ont été déposés avec les particules fluorescentes, sont repérés et peuvent être prélevés.

Un premier but de l'invention est de proposer un produit liquide adhérent ou d'enduction assurant un marquage sécurisé indétectable à l'oeil nu de l'article sur lequel il est appliqué. Ceci permettra la traçabilité secrète ou l'authentification de l'article marqué.

Ce but est atteint par une encre de marquage incolore liquide révélable optiquement, caractérisée en ce qu'elle comprend une proportion minimale de molécules fluorescentes, invisibles à la lumière du jour après application sur le support, mais détectable optiquement par épifluorescence dans une plage de longueur d'onde d'excitation comprise dans le visible.

D'autres caractéristiques de l'encre sécurisée révélable optiquement selon l'invention sont définies ci après.

Un autre but de l'invention est de proposer un procédé de marquage de produit par une encre révélable optiquement.

Ce but est atteint par le procédé de marquage de produits par une encre liquide révélable optiquement qui comprend une étape de dépôt sur la surface du produit à marquer d'une faible quantité d'encre sécurisée, détectable par épifluorescence, dans une plage de longueur d'onde d'excitation comprise dans le visible, pour former un code imprimé.

D'autres caractéristiques du procédé de marquage de produits selon l'invention sont définies ci après.

L'invention concerne également l'utilisation du produit pour authentifier, par marquage, des oeuvres d'art, des textiles, du verre creux ou plat (par traitement de surface, par sérigraphie, ou par jet d'encre), des pièces détachées métalliques (par traitement de surface), des blisters aluminium (par héliogravure ou par flexographie), des papiers de sécurité, des billets de banque et des papiers de scellement (fiscales ou oeuvres d'art).

D'autres particularités et avantages de la présente invention apparaîtront plus clairement à la lecture de la description ci-après faite en référence aux dessins annexés dans lesquels :
- la figure 1 représente schématiquement l'observation par microscopie à épifluorescence d'un produit marqué selon le procédé de marquage selon l'invention ;
- la figure 2 représente le champ de vision dans l'oculaire du microscope du marquage d'un produit ;
- la figure 3 représente une vue en coupe d'un support marqué selon le procédé de marquage selon l'invention ;
- la figure 4 représente schématiquement l'observation par épifluorescence selon un dispositif différent, d'un produit sur lequel est appliqué le produit selon l'invention.

Dans la suite de la description, on entend par produit liquide adhérent ou d'enduction, tout type de produit pouvant être appliqué sur un support. Le produit liquide adhérent ou d'enduction pourra être par exemple, une colle, une encre, un vernis, une laque, une huile, telle qu'une huile pour pièce métalliques ou utilisées pour l'ensimage de fils textiles, un agent de surface ayant des propriétés anti-rayures, anti-adhésion...

L'encre de marquage selon l'invention, comprend des molécules fluorescentes, détectables par épifluorescence. L'épiscopie se distingue de la diascopie par le fait que dans la première, le rayonnement d'excitation de l'objet observé ne traverse pas ce dernier, alors que dans la diascopie, la source lumineuse est de l'autre côté de l'objet observé par rapport à l'observateur.

Les molécules fluorescentes selon l'invention sont invisibles sur le produit marqué à l'oeil nu ou par tout autre moyen classique utilisant, comme dans le domaine des encres sécurisées, des rayonnements UV, IR ou de type lumière rasante. Les molécules fluorescentes selon l'invention sont détectées par épifluorescence en étant excitées par une plage de longueur d'onde déterminée du spectre d'émission d'une source lumineuse. Cette source lumineuse pourra être par exemple celle intégrée à un microscope à épifluorescence. De même, l'excitation des molécules fluorescentes, permettant l'émission fluorescente dans une plage de longueur d'onde comprise environ entre 0,385 et 0,7 µm appartenant à la plage des rayonnements visibles par l'oeil humain, ne s'effectue que pour une intensité lumineuse d'excitation déterminée, par exemple comprise entre 150 et 300 Candela. La source lumineuse peut être constituée, par exemple, par une lampe à vapeur de mercure, de xénon ou d'argon. A titre d'exemple, les molécules fluorescentes utilisées dans la présente invention pourront être constituées de molécules fluorescentes traditionnellement utilisées pour le repérage de particules sphériques, de brins d'ADN ou de protéines, telles que celles commercialisées par la société "Molecular Probes", par exemple sous les références "Alexa Fluor", "Texas Red",...etc pour les solutions aqueuses et "BODIPY" pour les solutions à base de solvants (alcool, acétone, ester, toluène...). A titre d'exemple également, le spectre lumineux de la lampe à vapeur de mercure choisie a notamment des pics d'émission dans une plage de longueur d'onde de 0,385 à 0,6 µm et en particulier pour les longueurs d'onde suivantes : 0,436, 0,546, 0,577-0,579.

Selon l'invention, le produit liquide adhérent ou d'enduction est une encre sécurisée révélable optiquement. Dans la suite de la description, on entend par encre, toute préparation liquide ou pâteuse utilisée pour un système d'imprimerie. A titre d'exemple, on entend par encre, une encre colorée ou non, ou une laque ou un vernis.

L'encre selon l'invention comprend des molécules fluorescentes détectables par épifluorescence. Cette détection est réalisée, par exemple, à l'aide d'un microscope à épifluorescence comportant une source lumineuse émettant dans le visible, combinée à un jeu de filtres pour provoquer l'excitation des molécules fluorescentes contenues dans l'encre autour d'une longueur d'onde déterminée. Les molécules fluorescentes sont ajoutées dans l'encre à une concentration très faible pour ne pas être visible à la lumière du jour sur le produit marqué et dans une concentration minimale au-dessous de laquelle il devient difficile de les détecter. Cette concentration minimale sera par exemple de 0,001 g/l. Comme l'encre doit être incolore, la base de l'encre est constituée d'un mélange liquide d'une résine incolore, traditionnellement utilisée dans le domaine des impressions, dans un solvant incolore. La nature des molécules fluorescentes peut varier, l'encre demeurant totalement invisible à l'oeil nu et à la lumière naturelle après son application sur le produit à marquer.

Des additifs de comportements, également incolores mais influant par exemple sur la viscosité ou d'autres paramètres physico-chimiques de l'encre, peuvent être ajoutés. Les molécules fluorescentes doivent présenter une bonne solubilité dans le solvant utilisé afin d'assurer une bonne dispersion des molécules fluorescentes dans le solvant.

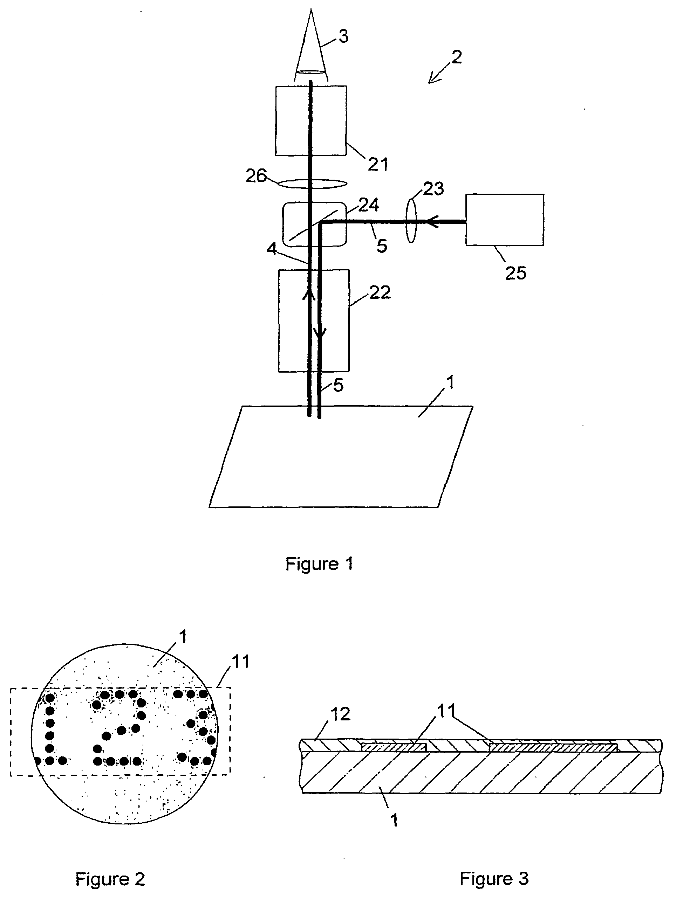

Le procédé de marquage d'un produit consiste à imprimer sur la surface du produit, au moyen de l'encre invisible décrite ci-dessus un repère d'identification, de type poinçon d'orfèvrerie, ou un code, par exemple alphanumérique. Les produits peuvent être aussi marqués par un code alphanumérique incrémenté permettant de tracer secrètement chaque produit. Suivant la figure 1, l'observation visuelle du code, s'effectue par l'intermédiaire d'un moyen de détection constitué, par exemple, par un microscope à épifluorescence (2).

Le microscope à épifluorescence comprend un oculaire (21), par exemple de grossissement 10, et un objectif (22), par exemple de grossissement 5, entre lesquels est placé un miroir dichroïque (24). Le miroir (24) permet de faire réfléchir le rayonnement d'une source lumineuse (25) en direction du produit (1) formant le support, afin d'éclairer par dessus le produit marqué (1). Le produit marqué (1) est disposé sous l'objectif (22) et peut être observé visuellement par l'oculaire (21) tel que représenté par la référence (3). Le microscope comprend un jeu de filtres (23, 26) adapté aux caractéristiques de la molécule fluorescente utilisée et de la source lumineuse ainsi qu'à la surface du produit marqué. Ce jeu de filtres permet d'isoler les photons de l'émission fluorescente (4) des photons d'excitation (5) émis par la source lumineuse et réfléchis par le miroir (24) et d'obtenir également un contraste suffisant entre le code et le produit. Le jeu de filtres comprend un filtre (23), dit d'excitation, placé entre la source (25) et le miroir (24), et un filtre (26), dit d'arrêt ou d'émission, placé entre le miroir (24) et l'oculaire (21). Le filtre d'excitation (23) favorisera le passage des longueurs d'ondes spécifiques du rayonnement provenant de la source lumineuse choisie émettant dans le visible. Ces longueurs d'ondes seront déterminées en fonction du fluorochrome, c'est à dire de la matière fluorescente choisie pour produire sous une longueur d'onde d'excitation donnée du visible, une longueur d'onde d'émission fluorescente dans le spectre des rayonnements visibles. Le miroir dichroïque est adapté en deux spectres de longueur d'onde excitatrice et d'émission. Le filtre d'arrêt ne laisse passer qu'une ou plusieurs plages de longueurs d'ondes dans la plage choisie comprise entre 0,4 µm et 0,7 µm. Ce filtre (26) d'arrêt ou d'émission est très important car il permet :
- d'empêcher le passage des ondes transmises, c'est-à-dire non réfléchies par le miroir (24) dichroïque, issues de la réflexion de la lumière incidente sur le produit marqué (1) et directement de la source lumineuse et,
- de sélectionner les ondes d'émission émises par la fluorescence.

L'encre, selon l'invention, peut être déposée en faible quantité sur le produit à marquer selon différents procédés d'impression, tels que par sérigraphie, par héliogravure, par jet d'encre (ink-jet), par un procédé offset, par flexographie ou par tampographie ou par typographie, par taille douce ou par transfert thermique. L'encre peut également être déposée manuellement sur le produit par l'intermédiaire d'un tampon ou d'un stylo. Dans le cas d'une impression d'un code par un procédé de type jet d'encre, les têtes d'impression permettent la formation de petits caractères et sont configurées pour déposer le moins d'encre possible afin de garantir l'invisibilité du marquage. L'impression pourra être inversée sur le support afin de prendre en compte l'inversion de la visualisation de l'impression à travers l'objectif. La figure 2 représente le champ de vision à l'oculaire (21) du code (11) imprimé sur le produit (1), avec le grossissement 50. A titre d'exemple, le code (11) est constitué par un ensemble de caractères de 2 millimètres de hauteur.

La proportion de molécules fluorescentes dans l'encre utilisée doit être suffisamment importante pour permettre l'impression d'un code aisément détectable, par le matériel d'épifluorescence, tout en restant invisible à la lumière du jour. Ainsi à l'heure actuelle avec le matériel disponible en puissance de lampe, type de lampe et rendement optique, on utilise par exemple un minimum de l'ordre de 0,001 g/l. La proportion de molécules fluorescentes dans l'encre peut présenter une limite supérieure suivant la solubilité des molécules fluorescentes dans le solvant et/ou suivant le procédé d'impression. Dans ce cas, cette limite supérieure sera respectée.

L'encre, selon l'invention, peut être déposée sur tout type d'objet tel que des flacons, bouteilles, par exemple en verre ou en matière plastique, ou encore des emballages, par exemple en carton, pour marquer ou identifier les produits qu'ils contiennent. L'encre, appliquée par exemple manuellement, par exemple par un stylo-feutre ou un tampon, peut également servir à tracer ou authentifier des objets ou documents importants tels que par exemple contrats, factures, testaments, oeuvres d'art.

En référence à la figure 3, une ou plusieurs couches (12), dites de recouvrement, sont déposées sur le code (11) imprimé. Cette couche de recouvrement recouvre au moins la partie de la surface du produit (1) présentant le code (11) imprimé et peut, selon l'application, recouvrir l'ensemble de la surface du produit (1). Cette couche (12) de recouvrement permet de rendre totalement invisible à l'oeil nu le code imprimé, même par un éclairage rasant. En effet, la couche d'encre formant le code (11), même dépourvue de pigments ou colorants, peut être visible, soit du fait de l'épaisseur de l'encre sur le support, soit du fait d'une attaque chimique par certains solvant de l'encre ou encore par un effet de brillance. Cette couche de recouvrement procure une uniformisation de la surface du produit à l'endroit où est imprimé le code ainsi qu'une protection physique du code imprimé en empêchant l'enlèvement du code. La couche de recouvrement peut être obtenue par dépôt d'une couche de vernis, par une opération de pelliculage au moyen par exemple d'un film plastique, ou encore par dépôt d'une couche d'encre non opacifiante pour la fluorescence de l'encre utilisée pour former le code imprimé. Ainsi, dans le cas d'un code sécurisé sur un emballage, par exemple celui ci peut être déposé par jet d'encre et recouvert d'une couche de recouvrement, par exemple de type encre sérigraphique ou encre offset. L'enlèvement d'un tel marquage nécessite de dissoudre la couche de recouvrement avant de dissoudre le code, occasionnant ainsi des dégâts irréversibles sur l'emballage.

L'invisibilité totale de l'impression avec l'encre, selon l'invention, peut être obtenue sans nécessiter de couche de recouvrement lorsque le produit présente une surface poreuse et que l'encre peut imprégner le produit.

Dans le cas d'impression du code sur des cartons ou autres supports poreux imprimés ou non, tels que des étiquettes de bouteille ou l'envers d'emballage tel que des étuis de parfum, le code sécurisé peut être déposé directement sur le produit fini et demeure totalement invisible, sans nécessiter de couche de recouvrement de par la porosité du carton ou du support. Dans le cas d'emballages en cartons dit fermés, présentant un vernissage ou pelliculage comme la plupart des surfaces extérieures d'emballage, le marquage peut être effectué avant le pelliculage ou le vernissage. Sur certaines surfaces fermées non pelliculées et non vernies, le code peut être déposé sous une couche de recouvrement, de type offset ou sérigraphique par exemple, n'empêchant pas la révélation optique du marquage sécurisé.

L'impression de petits caractères avec une faible quantité d'encre, permet de positionner le code sur ou sous des mentions intouchables de l'emballage tel que le nom, la marque, la contenance ou le code barre du produit.

Afin de garantir l'inviolabilité totale de l'encre et de dédier une encre unique à une application, l'encre peut comprendre des molécules traceuses telles que des brins d'ADN et/ou des microsphères fluorescentes. Les encres peuvent être personnalisées par le choix de la molécule fluorescente et du code ADN. La détection du marquage s'effectue par une observation directe de la surface du produit, par exemple par microscopie à épifluorescence, sans destruction ou détérioration de la surface. Après détection du marquage par épifluorescence, l'opération d'authentification du contenu du marquage s'effectue par la lecture du code ADN qui permet de garantir l'inviolabilité et la traçabilité, mais occasionne, de par l'extraction de l'encre, une détérioration ou destruction de la surface. Ainsi, on peut envisager de remplacer le traceur ADN par tout autre type de traceur tel que par exemple des traceurs colorimétriques changeant de couleur par addition chimique avec un autre produit, ou les additifs chemiluminescents commercialisé par la société M.L.T. et décrit dans le brevet américain US 5 879 946.

Selon l'invention, l'encre de marquage pourra être également appliquée par transfert thermique sur le support de marquage, par exemple des étiquettes ou des cartes. Cette opération sera réalisée en enduisant un rouleau de transfert thermique avec le produit selon l'invention.

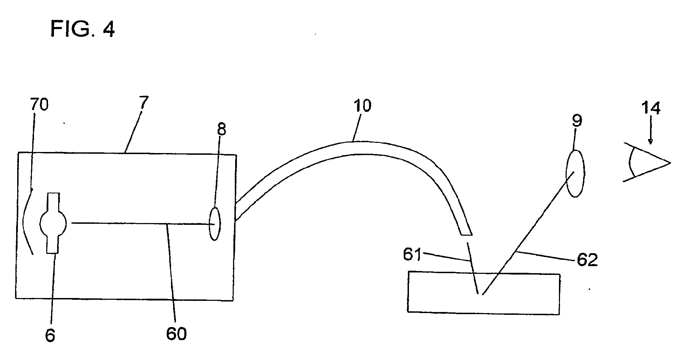

Selon l'invention, un autre système de détection permet d'observer la fluorescence par épifluorescence sans utiliser un microscope. Pour cela et en référence à la figure 4, ce système de détection comprend une source (6) lumineuse placée dans un boîte (7) percée, constituée, par exemple, d'une lampe à vapeur de mercure de 100 Watts et équipée d'un réflecteur (70) pour réfléchir la lumière vers le perçage réalisé dans la boîte (7). Selon l'invention, cette source lumineuse (6) émet dans le visible. Comme pour le microscope à épifluorescence, ce système de détection comprend un jeu de filtres adapté aux caractéristiques de la molécule fluorescente utilisée et de la source (6) lumineuse ainsi qu'à la surface du produit (13) marqué. Ce jeu de filtres comprend, comme pour le microscope, un filtre (8) d'excitation placé entre la source (6) et l'objet (13) marqué, par exemple dans la boîte (7) devant le perçage et permet de filtrer la lumière émise (60) par la source (6) lumineuse de manière à obtenir une ou plusieurs longueurs d'ondes déterminées. La lumière filtrée par le filtre (8) d'excitation passe ensuite dans un guide (10) lumière placé en sortie du perçage. Ce guide (10) lumière est chargé d'amener la lumière filtrée (61) vers le marquage sécurisé effectué sur un objet (13). Le jeu de filtres comprend également un filtre (9) d'émission chargé de ne laisser passer, parmi les longueurs d'ondes de la lumière émise (62) par les molécules fluorescentes, qu'une ou plusieurs plages de longueurs d'ondes du visible pour que celles-ci puissent être observées à l'oeil (14) nu ou à l'aide d'une caméra.

Dans ce nouveau dispositif, les ondes émises par le produit marqué sont les ondes issues de la réflexion de la lumière incidente sur le produit, celles constituant le bruit de fond de fluorescence sur l'objet et celles issues de l'émission de la fluorescence spécifique.

Les ondes d'excitation qui se réfléchissent sur le produit, forment une lumière sélectionnée du domaine du visible, c'est-à-dire une lumière visible de couleur déterminée. Cette lumière est donc réfléchie par le produit marqué et empêche d'observer les ondes issues de l'émission de la fluorescence. Le niveau de réflexion de la lumière incidente sur le produit marqué dépend de la couleur et de la nature de la surface du produit éclairé. Lorsque la réflexion est faible les ondes issues de l'émission de la fluorescence sont également affaiblies. De manière connue, pour tous les types de surface de produit, la réflexion des ondes issues de la source empêche la visibilité des ondes issues de l'émission de la fluorescence et ce malgré la présence d'une excitation dans une plage de longueurs d'ondes spécifique. Le filtre (9) d'émission sert donc à empêcher le passage des ondes issues de la réflexion sur le produit et également à améliorer le contraste en éliminant une partie des ondes formant le bruit de fond de fluorescence du produit.

Dans le cas de l'observation par épifluorescence de fluorescences émettant dans l'UV, le filtre d'arrêt n'est pas nécessaire. En effet, les ondes d'excitation étant très peu visibles, la réflexion des ondes d'excitation ne gêne pas l'observation des ondes émises issues de la fluorescence.

Selon l'invention, l'encre de marquage pourra être une huile utilisée par exemple pour l'ensimage de textiles.

Les fils textiles synthétiques, par exemple en polyamide, sont le plus souvent, après leur extrusion, ensimés par une huile minérale, ce qui leur confère une plus grande aptitude au maillage pour la formation de tissus. L'ensimage consiste à déposer une couche d'huile fine autour d'un fil textile.

Pratiquement, on débobine une bobine de fil brut, le fil débobiné passe alors sur un rouleau lécheur imprégné d'huile puis est rembobiné. La masse du dépôt d'huile sur le fil est de l'ordre de 2% de celle du fil.

On révèle le marquage fluorescent du domaine du visible en positionnant un fil ensimé avec l'huile marquée, sous l'objectif d'un microscope à épifluorescence doté de filtres correspondants aux plages de longueurs d'ondes d'excitation et d'émission des molécules fluorescentes introduites dans l'huile. De façon pratique, l'identification du marquage fluorescent se fait par comparaison d'un fil ensimé non marqué, c'est-à-dire sans fluorescence, avec un fil ensimé marqué, c'est-à-dire avec fluorescence.

Il sera possible également de révéler le marquage sécurisé en excitant les molécules fluorescentes directement sur un textile fabriqué à partir de fils ensimé par une lumière spécifique, d'intensité et de longueur d'ondes déterminées, la fluorescence se détectant à travers un filtre d'émission.

De même, l'encre de marquage selon l'invention pourra être constituée d'une solution d'imprégnation conférant généralement certaines propriétés aux textiles. Ces solutions peuvent conférer aux textiles des propriétés de touché, de rigidité, d'imperméabilité, d'activité anti-moustique... Les solutions d'imprégnation comprenant des molécules fluorescentes spécifiques marquent de façon indétectable à la lumière du jour, les textiles sur lesquels ils sont appliqués. Lors de la révélation du marquage, la fluorescence émise d'un tissu marqué de fluorescence sera d'autant plus visible que le tissu est clair.

Selon l'invention, il sera possible également d'utiliser les marquages selon l'invention pour d'autres applications que la sécurité. En effet, il est connu d'introduire des produits fluorescents révélables sous UV dans des vernis, des agents de surface, des colles ou d'autres médiums destinés à être déposés sur des objets. Le but de ces fluorescences révélables sous UV est de pouvoir contrôler la dépose du médium sur l'objet en observant la fluorescence émise par excitation sous UV.

Selon l'invention, pour atteindre ce même but, il sera possible d'utiliser les molécules fluorescentes révélables par excitation dans le visible. Plusieurs types de molécules fluorescentes excitables à des plages de longueur dondes différentes pourront être ajoutés au médium. L'excitation se fera alors soit séparément, c'est-à-dire en changeant de filtres d'excitation et d'émission pour chaque molécule fluorescente contenue dans le médium soit en excitant toutes les molécules fluorescentes en même temps en utilisant une source filtrée par une multi-bandes passante, l'observation se faisant à travers un filtre également multi-bandes passante.

Il sera donc possible d'ajouter des molécules fluorescentes différentes pour chaque couche de médium déposé sur l'objet ou des molécules fluorescentes différentes pour chaque médium déposé sur l'objet. Il sera ainsi possible d'observer les différentes couches du médium déposé ou les recoupements entre les différents médiums déposés, cette observation pouvant être effectuée de visu ou à l'aide d'une caméra en utilisant par exemple le dispositif représenté en figure 4 et décrit ci-dessus.

Ainsi, l'encre de marquage révélable optiquement utilisée dans le procédé selon l'invention, est une encre incolore qui comprend une proportion minimale de molécules fluorescentes, invisibles à la lumière du jour après application sur le support, mais détectable optiquement par épifluorescence dans une plage de longueur d'onde d'excitation comprise dans le visible, la proportion minimale étant de 0,001 g de molécules fluorescentes par litre de solution. L'encre comprend une base de résine et de solvant incolore, ce qui la rend invisible sur le support.

Selon une autre particularité, les molécules fluorescentes sont détectables optiquement à l'aide d'une source (6) lumineuse placée dans un boîtier (7) percé, émettant dans le visible vers le support (13) marqué et d'un filtre (9) d'émission filtrant les longueurs d'ondes spécifiques de la fluorescence.

Selon une autre particularité, les molécules fluorescentes sont détectables optiquement à l'aide d'un microscope (2) à épifluorescence.

Selon une autre particularité, la microscopie à épifluorescence est définie par une lampe (25) d'excitation à intensité lumineuse comprise entre 150 et 300 candela et l'utilisation d'un jeu de filtre (23, 26) d'excitation et d'émission adaptés d'une part aux caractéristiques de la source lumineuse, d'autre part à la molécule fluorescente utilisée, et aussi au support (1) du marquage.

Selon une autre particularité, l'encre est de type encre ink-jet, encre offset, encre de sérigraphie, encre d'héliogravure, encre de flexographie, encre de tampographie, typographie ou taille douce.

Selon une autre particularité, l'encre comprend des molécules traceuses d'ADN et/ou des microsphères fluorescentes.

Selon une autre particularité, le solvant est du type eau, MEC ou du type éthanol, du type ester, du type mélange ester-alcool, cyclohexanone, toluène.

Selon une autre particularité, le procédé de détection selon l'invention comporte une étape de dépôt sur la surface du produit (1) à marquer d'une faible quantité d'encre sécurisée, détectable par épifluorescence dans une plage de longueur d'ondes d'excitation comprise dans le visible, pour former un code imprimé (11), une étape de détection des molécules fluorescentes de l'encre par épifluorescence étant ensuite réalisée dans une plage de longueur d'ondes d'excitation comprise dans le visible, ladite étape de détection incluant d'une part une étape d'excitation réalisée par l'intermédiaire d'une source (6, 25) lumineuse associable à un filtre (8, 23) d'excitation du type laissant passer des longueurs d'ondes déterminées en fonction des molécules fluorescente pour émettre un rayonnement d'excitation dans le visible vers la surface marquée et d'autre part une étape d'observation utilisant un filtre (9, 26) d'émission choisi pour filtrer les longueurs d'ondes spécifiques de la fluorescence dans le domaine du visible et permettant l'observation de la fluorescence desdites molécules à l'oeil nu.

Selon une autre particularité, l'encre est déposée sur un rouleau de transfert thermique pour être déposé sur la surface du produit à marquer.

Selon une autre particularité, le dépôt de l'encre sécurisée est effectué, par sérigraphie, par héliogravure, par jet d'encre, par un procédé offset, par flexographie ou par tampographie industrielle ou manuelle, par typographie, taille douce ou stylo feutre.

Selon une autre particularité, le code imprimé (11) est un repère d'identification.

Selon une autre particularité, le produit marqué constitue un support poreux.

Selon une autre particularité, l'étape de dépôt de l'encre sécurisée est suivie d'une étape de dépôt d'au moins une couche (12) de recouvrement, non totalement opacifiante pour la fluorescence de l'encre sécurisée, sur au moins la partie marquée de la surface du produit (1), afin de rendre invisible l'épaisseur du dépôt de l'encre sécurisée.

Selon une autre particularité, la couche de recouvrement est constituée par une couche de vernis, un pelliculage, ou une couche d'encre.

L'invention concerne également l'utilisation du produit pour authentifier, par marquage, des oeuvres d'art, des textiles, du verre creux ou plat (par traitement de surface, par sérigraphie, ou par jet d'encre), des pièces détachées métalliques (par traitement de surface), des blisters aluminium (par héliogravure ou par flexographie), des papiers de sécurité et des billets de banque. Par papier de sécurité, on entendra par exemple des papiers couchés tels que des chèques, des titres, des pièces d'identité, des étiquettes, des bandelettes fiscales ou des papiers de scellement d'oeuvres d'art,...

## Revendications

1. Procédé de détection de produits par utilisation d'une encre de marquage incolore liquide révélable optiquement, **caractérisé en ce qu'**il comprend :
- une étape préalable d'incorporation dans l'encre de molécules fluorescentes du type excitables dans une plage de longueur d'onde d'excitation comprise dans le visible et adaptées pour être détectées optiquement par épifluorescence, dans une proportion minimale non inférieure à 0,001 g de molécules fluorescentes par litre d'encre, l'encre comprenant une base de résine incolore et de solvant incolore dans le but de la rendre invisible à la lumière naturelle à l'oeil nu, la concentration des molécules fluorescentes dans l'encre étant déterminée ;
- une étape de dépôt sur la surface du produit (1) à marquer d'une faible quantité d'encre dite sécurisée, dans laquelle ladite concentration déterminée de molécules fluorescentes est suffisamment faible, pour former un code imprimé (11) invisible à la lumière naturelle à l'oeil nu:
- une étape de détection des molécules fluorescentes de l'encre par épifluorescence dans une plage de longueur d'ondes d'excitation comprise dans le visible, ladite étape de détection incluant d'une part une étape d'excitation réalisée par l'intermédiaire d'une source (6, 25) lumineuse associable à un filtre (8, 23) d'excitation du type laissant passer des longueurs d'ondes déterminées en fonction des molécules fluorescente pour émettre un rayonnement d'excitation dans le visible vers la surface marquée et d'autre part une étape d'observation utilisant un filtre (9, 26) d'émission choisi pour filtrer les longueurs d'ondes spécifiques de la fluorescence dans la domaine du visible et permettant l'observation de la fluorescence desdites molécules à l'oeil nu.

2. Procédé selon la revendication 1, dans lequel l'étape de détection utilise une lampe (6, 25) d'excitation à intensité lumineuse comprise entre 150 et 300 candela et un jeu de filtre (8, 9) d'excitation et d'émission adaptés d'une part aux caractéristiques de la source (6, 25) lumineuse, d'autre part à la molécule fluorescente utilisée, et aussi à la surface formant le support (1) du marquage, ladite étape de détection étant mise en oeuvre par un système de détection de type boîte (7) percée incluant la lampe (6, 25) d'excitation associée à un filtre (8) d'excitation, un positionnement d'un guide lumière relié en sortie du perçage de la boîte (7) étant réalisé pour amener la lumière filtrée (61) issue de la boîte (7) percée vers le code imprimé (11) formé sur la surface du produit (1) à marquer.

3. Procédé selon la revendication 1 ou 2, **caractérisé en ce que** le dépôt de l'encre sécurisée est effectué, par sérigraphie, par héliogravure, par jet d'encre, par un procédé offset, par flexographie ou par tampographie industrielle ou manuelle, par typographie, taille douce ou stylo feutre.

4. Procédé selon la revendication 3, **caractérisé en ce que** l'encre est déposée sur un rouleau de transfert thermique pour être déposé sur la surface du produit à marquer.

5. Procédé selon une des revendications 1 à 3, **caractérisé en ce que** le code imprimé (11) est un repère d'identification.

6. Procédé de marquage de produit selon l'une des revendications 1, 2. 3 et 5, **caractérisé en ce que** le produit marqué constitue un support poreux.

7. Procédé selon l'une des revendications 1, 2, 3, 5 ou 6, **caractérisé en ce que** l'étape de dépôt de l'encre sécurisée est suivie d'une étape de dépôt d'au moins une couche (12) de recouvrement, non totalement opacifiante pour la fluorescence de l'encre sécurisée, sur au moins la partie marquée de la surface du produit (1), afin de rendre invisible l'épaisseur du dépôt de l'encre sécurisée.

8. Procédé selon la revendication 7, **caractérisé en ce que** la couche de recouvrement est constituée par une couche de vernis, un pelliculage, ou une couche d'encre.

9. Procédé selon les revendications 1 à 8, dans lequel ladite encre sécurisée est utilisée dans le domaine des oeuvres d'art.

10. Procédé selon les revendications 1 à 8, dans lequel ladite encre sécurisée est utilisée pour marquer des textiles.

11. Procédé selon les revendications 1 à 8, dans lequel ladite encre sécurisée est utilisée pour marquer du verre plat ou creux par traitement de surface par sérigraphie ou par jet d'encre.

12. Procédé selon les revendications 1 à 8, dans lequel ladite encre sécurisée est utilisée pour marquer des pièces détachées métalliques par traitement de surface.

13. Procédé selon les revendications 1 à 8, dans lequel ladite encre sécurisée est utilisée pour marquer des papiers de sécurité.

14. Procédé selon les revendications 1 à 8, dans lequel ladite encre sécurisée est utilisée pour marquer des billets de banque.

15. Procédé selon les revendications 1 à 8, dans lequel ladite encre sécurisée est utilisée pour marquer des blisters pharmaceutiques par héliogravure ou par flexographie.

## Patentansprüche

1. Verfahren zum Erkennen von Produkten unter Verwendung einer unsichtbaren, flüssigen Markierungstinte, die optisch sichtbar gemacht werden kann, **dadurch gekennzeichnet, dass** es folgende Schritte aufweist:
- einen vorausgehenden Schritt des Beimengens von fluoreszierenden Molekülen, die in einem im Sichtbaren enthaltenen Erregungs-Wellenlängenbereich erregbar und so angepasst sind, dass sie durch Epifluoreszenz optisch erkennbar sind, in die Tinte in einem Mindestverhältnis von nicht unter 0,001 g fluoreszierender Moleküle pro Liter Tinte, wobei die Tinte eine Grundlage aus farblosem Harz und farblosem Lösungsmittel aufweist, um sie mit bloßen Auge unter natürlichem Licht unsichtbar zu machen, wobei die Konzentration der fluoreszierenden Moleküle in der Tinte festgelegt ist;
- einen Schritt des Auftragens einer geringen Menge sogenannter Sicherheitstinte auf die Oberfläche des zu markierenden Produkts (1), bei dem die festgelegte Konzentration von fluoreszierenden Molekülen gering genug ist, um ein bei natürlichem Licht mit bloßem Auge unsichtbaren gedruckten Code (11) zu bilden;
- einen Schritt des Erkennens der fluoreszierenden Moleküle der Tinte durch Epifluoreszenz in einem im Sichtbaren enthaltenen Erregungs-Wellenlängenbereich, wobei der Schritt des Erkennens einerseits einen Schritt der Erregung umfasst, die über eine Lichtquelle (6, 25) erfolgt, die einem Erregerfilter (8, 23) von dem Typ zugeordnet werden kann, der die festgelegten Wellenlängen in Abhängigkeit der fluoreszierenden Moleküle durchlässt, um im Sichtbaren eine Erregungsstrahlung zur markierten Fläche zu senden, andererseits einen Schritt der Beobachtung, bei welchem ein Sendefilter (9, 26) eingesetzt wird, der ausgewählt wird, um die fluorezenzspezifischen Wellenlängen zu filtern, die die Beobachtung der Fluoreszenz der Moleküle mit bloßem Auge ermöglichen.

2. Verfahren nach Anspruch 1, bei welchem bei dem Schritt des Erkennens eine Erregerlampe (6, 25) mit einer Leuchtintensität zwischen 150 und 300 Candela und einem Satz von Erreger- und Sendelichtfiltern (8. 9) verwendet wird, welche einerseits den charakteristischen Eigenschaften der Lichtquelle (6, 25) und andererseits dem verwendeten fluoreszierenden Molekül angepasst sind, wobei der Schritt des Erkennens auch an der den Markierungsträger (1) bildenden Oberfläche mittels einer Erkennungseinrichtung vom Typ einer durchbohrten Dose (7) ausgeführt wird, die die einem Erregerlichtfilter (8) zugeordnete Erregerlampe (6, 25) umfasst, wobei ein mit dem Ausgang der Bohrung der Dose (7) verbundener Lichtleiter positioniert wird, um das aus der durchbohrten Dose kommende gefilterte Licht (61) zum gedruckten Code (11) zu bringen, der auf der Oberfläche des zu markierenden Produkts (1) angebracht ist.

3. Verfahren nach Anspruch 1 oder 2, **dadurch gekennzeichnet, dass** das Auftragen der Sicherheitstinte mittels Siebdrucks, Tiefdrucks, Tintenstrahls, Offset-Verfahrens, Flexodrucks, industriellen oder manuellen Tampondrucks, Typographie, Kupferstichs oder Filzstifts erfolgt.

4. Verfahren nach Anspruch 3, **dadurch gekennzeichnet, dass** die Tinte auf einen Wärmeübertragzylinder aufgetragen wird, um auf die Oberfläche des zu markierenden Produkts übertragen zu werden.

5. Verfahren nach einem der Ansprüche 1 bis 3, **dadurch gekennzeichnet, dass** der gedruckte Code (11) eine Identifikationsmarke darstellt.

6. Verfahren nach einem der Ansprüche 1, 2, 3 und 5, **dadurch gekennzeichnet, dass** das markierte Produkt einen porösen Träger darstellt.

7. Markierungsverfahren nach einem der Ansprüche 1, 2, 3, 5 oder 6, **dadurch gekennzeichnet, dass** der Schritt des Auftragens der Sicherheitstinte von einem Schritt des Auftragens mindestens einer Deckschicht (12) gefolgt wird, die die Fluoreszenz der Sicherheitstinte auf mindestens dem markierten Teil der Oberfläche des Produkts (1) nicht vollständig undurchsichtig macht, um die Dicke des Sicherheitstintenauftrags unsichtbar zu machen.

8. Verfahren nach Anspruch 7, **dadurch gekennzeichnet, dass** die Deckschicht aus einer Firnisschicht, einer Folie oder einer Tintenschicht besteht.

9. Verfahren nach den Ansprüchen 1 bis 8, bei welchem die Sicherheitstinte auf dem Gebiet der Kunstwerke eingesetzt wird.

10. Verfahren nach den Ansprüchen 1 bis 8, bei welchem die Sicherheitstinte zum Markieren von Textilien eingesetzt wird.

11. Verfahren nach den Ansprüchen 1 bis 8, bei welchem die Sicherheitstinte zum Markieren von flachem oder hohlem Glas durch Oberflächenbearbeitung mittels Siebdrucks oder Tintenstrahls eingesetzt wird.

12. Verfahren nach den Ansprüchen 1, bis 8, bei welchem die Sicherheitstinte zum Markieren von metallischen Einzelteilen durch Oberflächenbearbeitung eingesetzt wird.

13. Verfahren nach den Ansprüchen 1 bis 8, bei welchem die Sicherheitstinte zum Markieren von Sicherheitspapieren eingesetzt wird.

14. Verfahren nach den Ansprüchen 1 bis 8, bei welchem die Sicherheitstinte zum Markieren von Banknoten eingesetzt wird.

15. Verfahren nach den Ansprüchen 1 bis 8, bei welchem die Sicherheitstinte zum Markieren von pharmazeutischen Blisterpackungcn mittels Tiefdrucks oder Flexodrucks eingesetzt wird.

## Claims

1. Method for detecting products by using an optically detectable liquid colourless ink, **characterised in that** it comprises:
- a preliminary step of incorporating into the ink fluorescent molecules of the type that are excitable within an excitation wavelength range comprised in the visible spectrum, said molecules being adapted to be detected optically by epifluorescence, in a minimal proportion not less than 0.001 g of fluorescent molecules per litre of ink, the ink comprising a colourless resin and solvent base with the aim of rendering it invisible to the naked eye under natural light, the concentration of fluorescent molecules in the ink being predetermined;
- a step of depositing on the surface of the product (1) to be marked a small quantity of what is known as secure ink, in which said predetermined concentration of fluorescent molecules is sufficiently low, in order to form a printed code (11) invisible to the naked eye under natural light;
- a step of detecting the fluorescent molecules of ink by epifluorescence within an excitation wavelength range comprised in the visible spectrum, said detection step including, on the one hand, an excitation step performed via a light source (6, 25) that can be associated with an excitation filter (8, 23) of the type allowing predetermined wavelengths to pass through as a function of the fluorescent molecules in order to emit excitation radiation within the visible spectrum towards the marked surface and, on the other hand, an observation step using an emission filter (9, 26) chosen in order to filter out the specific wavelengths of fluorescence within the visible spectrum and making it possible to observe the fluorescence of said molecules with the naked eye.

2. Method according to Claim 1, in which the detection step uses an excitation lamp (6, 25) with a light intensity comprised between 150 and 300 candela and a set of excitation and emission filters (8, 9) adapted on the one hand to the characteristics of the light source (6, 25), on the other hand to the fluorescent molecule used, and also to the surface forming the marking base (1), said detection step being implemented by a detection system of the perforated box (7) type including the excitation lamp (6, 25) associated with an excitation filter (8), a light guide connected at the outlet of the perforation of the box (7) being positioned so as to guide the filtered light (61) emerging from the perforated box (7) towards the printed code (11) formed on the surface of the product (1) to be marked.

3. Method according to Claim 1 or 2, **characterised in that** the secure ink is deposited by screen printing, photogravure, ink jet, an offset method, flexography or by industrial or manual pad printing, by typography, steel engraving or felt pen.

4. Method according to Claim 3, **characterised in that** the ink is deposited on a thermal transfer roller in order to be deposited on the surface of the product to be marked.

5. Method according to one of Claims 1 to 3, **characterised in that** the printed code (11) is an identification mark.

6. Method according to one of Claims 1, 2, 3 and 5, **characterised in that** the marked product constitutes a porous base.

7. Method according to one of Claims 1, 2, 3, 5 or 6, **characterised in that** the step of deposition of the secure ink is followed by a step of depositing at least one coating layer (12), not totally opacifying for the fluorescence of the secure ink, on at least the marked part of the surface of the product (1), so as to render the thickness of the deposit of secure ink invisible.

8. Method according to Claim 7, **characterised in that** the coating layer is constituted by a layer of varnish, a surface film treatment or a layer of ink.

9. Method according to Claims 1 to 8, in which said secure ink is used in the field of works of art.

10. Method according to Claims 1 to 8, in which said secure ink is used for marking textiles.

11. Method according to Claims 1 to 8, in which said secure ink is used for marking hollow or flat glass by surface treatment, screen printing or ink jet printing.

12. Method according to Claims 1 to 8, in which said secure ink is used for marking metal spare parts by surface treatment.

13. Method according to Claims 1 to 8, in which said secure ink is used for marking security papers.

14. Method according to Claims 1 to 8, in which said secure ink is used for marking banknotes.

15. Method according to Claims 1 to 8, in which said secure ink is used for marking pharmaceutical blisters by photogravure or flexography.
